# FASCICULE DE BREVET EUROPEEN

(11) **EP 1 029 769 B1**
(45) Date de publication et mention de la délivrance du brevet: **02.07.2003**
(21) Numéro de dépôt: 00400405.7
(22) Date de dépôt: 11.02.2000
(51) Int. Cl.: B62D 1/06

(54) **Volant de direction de véhicule**
Kraftfahrzeuglenkrad
Motor vehicle steering wheel

(30) Priorité: 19.02.1999 FR 9902100
(43) Date de publication de la demande: 23.08.2000
(73) Titulaire: Gersteen - Iso Delta, 86190 Vouille (FR)
(72) Inventeur: Donnelly, Jean, 86000 Poitiers (FR)
(74) Mandataire: Santarelli

(56) Documents cités:
- DE-U- 29 702 241
- FR-A- 658 988

## Description

L'invention a trait aux volants de direction de véhicule.

On connaît déjà un tel volant qui comporte autour de la jante de l'armature, un manchon en bois collé par sa surface latérale interne sur la surface latérale externe de la jante, l'habillage de cette dernière étant complété par une garniture en mousse de polyuréthane.

L'invention vise à fournir un volant ayant un toucher et un aspect similaires mais qui soit moins contraignant sur le plan de la fabrication.

Elle propose à cet effet un volant de direction de véhicule dont la jante de l'armature est habillée par un manchon en matière rigide telle que du bois disposé en périphérie externe et par une garniture complémentaire, caractérisé en ce que ledit manchon présente une fente transversale et en ce que ledit volant comporte des moyens pour maintenir rapprochés les bords de ladite fente.

Grâce à sa fente, lorsque ses bords ne sont pas maintenus rapprochés, le manchon du volant selon l'invention peut subir une légère déformation qui rend possible sa mise en place sur le reste du volant avec toute sorte de conformation pour sa surface latérale interne, ce qui est beaucoup moins contraignant que le volant antérieur précité dont le manchon, non fendu, doit avoir une surface latérale interne autorisant sa mise en place sur la jante de l'armature suivant un mouvement axial.

Selon des caractéristiques préférées, la surface latérale interne dudit manchon est concave.

Le manchon peut ainsi envelopper au mieux la jante de l'armature, puisqu'il est notamment possible d'avoir à la fois une portion au-dessus et une portion en-dessous de la jante, contrairement au volant antérieur précité.

Selon d'autres caractéristiques préférées, ladite garniture complémentaire comporte une matière souple disposée entre ladite jante et ledit manchon.

On évite ainsi que la dispersion dimensionnelle de fabrication de l'armature, qui est relativement grande puisque l'armature est obtenue par soudage ou par moulage, pose des difficultés de montage du manchon, puisque la matière située entre la jante et le manchon est capable, du fait de sa souplesse, d'autoriser une plage de variations relativement élevée dans le positionnement relatif de la jante et du manchon.

De préférence, ladite matière souple est moulée tout autour de la jante.

L'opération de moulage de la matière souple est ainsi particulièrement aisée à réaliser puisqu'il n'y a pas de mesure d'étanchéité à prévoir entre le moule et l'élément qui y est disposé, c'est-à-dire l'armature, contrairement au volant antérieur précité pour lequel l'élément placé dans le moule est l'ensemble armature-manchon collé sur celle-ci, et où seules les zones hors bois doivent être recouverte de mousse de polyuréthane.

De préférence, ledit manchon présente une surface latérale interne ayant une section en U tandis que ladite matière souple présente une section en forme de champignon de sorte que la surface externe du manchon est sensiblement à fleur de la surface externe de la portion de ladite matière souple qui n'est pas recouverte par le manchon.

Le volant est ainsi simple et commode à fabriquer tout en offrant d'excellentes caractéristiques de toucher et d'aspect.

Dans un premier mode de réalisation préférée, le volant selon l'invention comporte une matière souple disposée tout autour de la jante et un revêtement en feuille disposé tout autour de ladite matière souple, ledit manchon étant rapporté sur la périphérie externe dudit revêtement.

On observera que ce mode de réalisation peut être obtenu directement à partir d'un volant conventionnel dont le revêtement est par exemple en cuir, auquel on rajoute le manchon fendu (et les moyens pour maintenir rapprochés les bords de la fente), ce qui permet par exemple d'obtenir un volant ayant une jante dont la surface périphérique externe est en bois et la surface périphérique interne en cuir.

Dans un deuxième mode de réalisation préférée, le volant selon l'invention comporte une matière souple recouvrant la jante et un revêtement en feuille recouvrant ladite matière souple exclusivement à l'opposé dudit manchon.

Ce mode de réalisation permet d'obtenir un volant dont la jante présente un aspect extérieur similaire à celui du premier mode de réalisation, mais plus économique puisqu'il n'y a pas à prévoir de revêtement pour la matière souple sous le manchon.

Selon des caractéristiques préférées de chacun de ces deux modes de réalisation, ledit revêtement en feuille présente des bords longitudinaux réunis par une couture circonférentielle située du côté interne.

La surface périphérique interne de la jante a ainsi l'agencement classique des volants revêtus de cuir.

On observera que le deuxième mode de réalisation exposé ci-dessus est particulièrement avantageux pour permettre la mise en oeuvre de cette couture, puisque celle-ci peut être réalisée à plat avant que le revêtement soit collé sur la matière souple.

Dans un mode de réalisation alternatif préférée, pour des raisons d'économie, le volant selon l'invention comporte une mousse de polyuréthane à peau intégrée moulée tout autour de ladite jante.

Selon d'autres caractéristiques préférées, ladite garniture complémentaire est formée par un deuxième manchon en matière rigide disposé en périphérie interne.

L'habillage de la jante de l'armature peut ainsi être obtenue de façon particulièrement simple, commode et économique.

En particulier, on observera qu'avec une telle garniture complémentaire, on peut se passer complètement de toute opération de moulage d'une matière souple autour de la jante.

De préférence, pour des raisons pratiques :
- ledit deuxième manchon comporte une portion supérieure et une portion inférieure réunies l'une à l'autre ; et éventuellement
- les première et deuxième portions dudit deuxième manchon comportent chacune un premier bord longitudinal par lequel elle est réunie à l'autre portion et un deuxième bord longitudinal par lequel elle est réunie audit manchon ; et/ou éventuellement
- ledit deuxième manchon comporte un moyen de positionnement par rapport à la jante ; et/ou éventuellement
- ledit manchon présente une surface interne ayant une section en U tandis que ledit deuxième manchon présente une section en forme de champignon de sorte que la surface externe du manchon est sensiblement à fleur de la surface externe du deuxième manchon.

Selon d'autres caractéristiques préférées, pour des raisons pratiques, lesdits moyens pour maintenir rapprochés les bords de la fente comportant une patte de liaison solidarisée audit manchon respectivement de part et d'autre de ladite fente.

Selon des caractéristiques alternatives préférées, également pour des raisons pratiques, lesdits moyens pour maintenir rapprochés les bords de ladite fente comportent, de chaque côté de celle-ci, un ergot transversal en saillie par rapport à la surface latérale interne dudit manchon tandis que ladite jante présente deux orifices adaptés chacun à recevoir un respectif desdits ergots.

On observera qu'avec ces caractéristiques, on assure non seulement le maintien des bords de la fente rapprochés l'un de l'autre, mais aussi le maintien du positionnement relatif du manchon vis-à-vis de la jante.

L'exposé de l'invention sera maintenant poursuivi par la description d'exemples de réalisation, donnée ci-après à titre d'exemple illustratif et non limitatif, en référence aux dessins annexés. Sur ceux-ci :
- la figure 1 est une vue en perspective avec arrachement partiel montrant un volant conforme à l'invention ;
- la figure 2 est une vue en élévation-coupe montrant la jante de l'armature de ce volant et son habillage ;
- la figure 3 est une vue similaire pour une variante de réalisation ;
- la figure 4 est une vue en perspective montrant partiellement le manchon que comporte la variante de la figure 3, cette vue étant prise depuis le côté intérieur, avec les bords de la fente éloignés l'un de l'autre ;
- la figure 5 est une vue en section plane prise dans ce manchon avec les bords de la fente qui sont maintenus rapprochés ;
- la figure 6 est une vue similaire à la figure 4, montrant une deuxième version de la patte de liaison qui sert à maintenir rapprochés les bords de la fente ;
- les figures 7 et 8 sont des vues en section plane similaires à la figure 5, montrant pour cette version le manchon respectivement avec ses bords éloignés et maintenus rapprochés l'un de l'autre ;
- la figure 9 est une vue en perspective prise depuis le côté externe, montrant une troisième version de la patte de liaison ;
- la figure 10 est une vue en section plane similaire aux figures 5 et 8, pour cette troisième version de la patte de liaison ;
- la figure 11 est une vue en perspective prise depuis le côté extérieur, montrant une première variante des moyens pour maintenir rapprochés les bords de la fente du manchon ;
- la figure 12 est une vue en perspective avec arrachement partiel, montrant une troisième variante des moyens pour maintenir rapprochés les bords de la fente ;
- la figure 13 est une vue correspondante en section plane ;
- la figure 14 est une vue similaire à la figure 3 pour laquelle il n'y a pas de revêtement en cuir sur la couche de mousse de polyuréthane ; et
- la figure 15 est une vue similaire, pour une variante de réalisation où la mousse de polyuréthane est remplacée par un deuxième manchon en matière rigide.

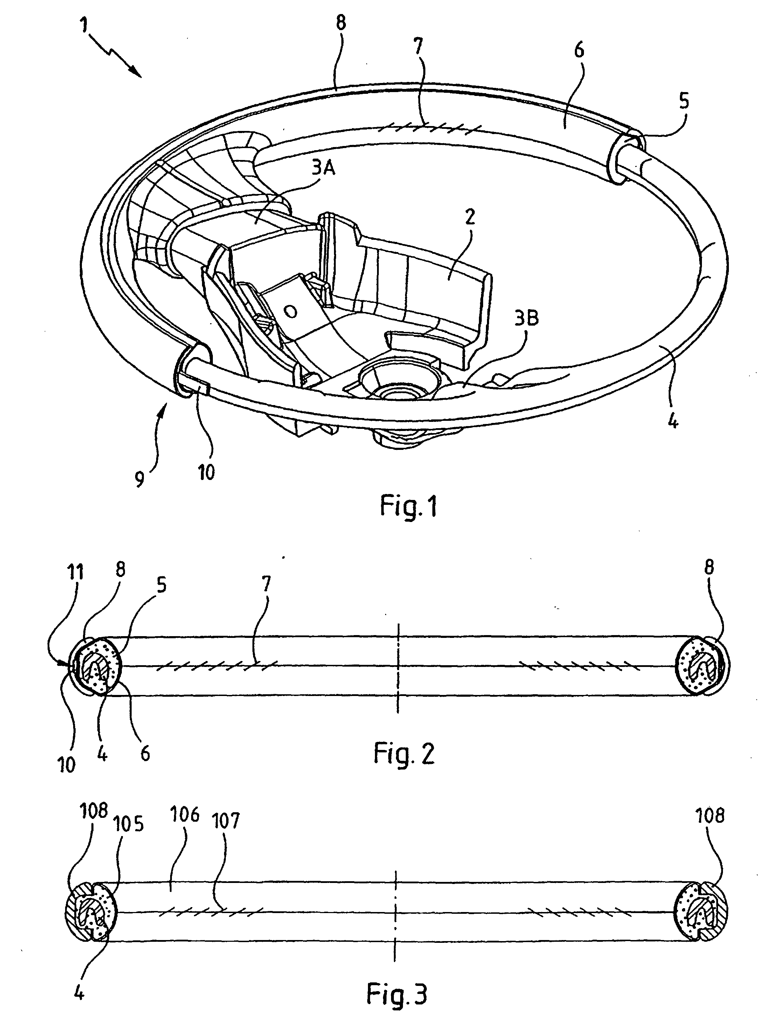

Le volant 1 montré sur la figure 1 comporte une armature métallique, ici en alliage moulé et usiné, comportant un moyeu 2, deux branches 3A et 3B se raccordant chacune par une extrémité au moyeu 2 et une jante 4 à laquelle se raccorde l'autre extrémité des bras 3A et 3B.

La jante 4 a une section en U renversé et est entièrement enrobée par une garniture 5 en mousse de polyuréthane entourée à son tour par un revêtement en cuir 6 dont les bords longitudinaux sont réunis par une couture circonférientielle 7 montrée schématiquement sur les figures 1 et 2, cette couture étant située classiquement du côté interne.

Sur la périphérie externe du revêtement 6, est rapporté un manchon 8 en bois, ayant en section transversale une forme en C, ce manchon présentant une fente transversale 9 et, pour maintenir rapprochés les bords de cette fente, une patte de liaison 10 logée dans un renfoncement 11 ménagé en creux par rapport à la surface latérale interne du manchon 8, la solidarisation entre ce dernier et la patte 10 étant réalisée par collage.

La fabrication de l'habillage de la jante 4 s'effectue en plaçant d'abord cette dernière dans un moule grâce auquel on réalise ensuite la garniture 5 de mousse de polyuréthane, on entoure ensuite cette couche avec le revêtement en cuir 6 puis on réalise la couture 7, et enfin l'on procède à la mise en place du manchon 8, celle-ci étant rendue possible, malgré la rigidité du bois et le fait que le manchon 8 comporte à la fois une portion qui doit venir au-dessus et une portion qui doit venir en-dessous de l'armature 4, grâce à la fente 9 dont on écarte les bords pour réaliser l'emboîtement et, une fois celui-ci réalisé, dont on rapproche les bords, ces derniers étant ensuite maintenus rapprochés grâce au collage réalisé entre la patte de liaison 10 et le manchon 8.

Dans la variante montrée sur les figures 3 à 5, on a employé pour les éléments similaires les mêmes références numériques, mais additionnées du chiffre 100.

Le manchon 108 présente comme le manchon 8 une surface externe ayant en section transversale une forme de C, mais il est plus épais et présente une surface interne ayant en section une forme en U.

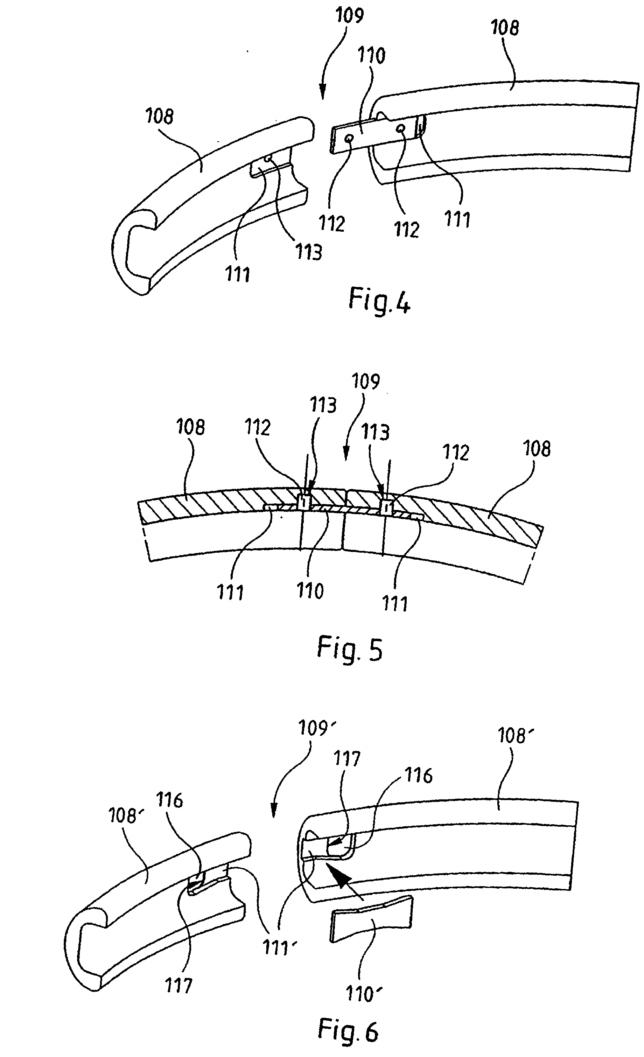

La patte de liaison 110 est similaire à la patte 10, mais présente deux ergots 112 orientés transversalement tandis que le renfoncement 111 présente dans chaque partie située respectivement de part et d'autre de la fente 109, un trou 113 servant à recevoir l'un des ergots 112, les bords de la fente 109 étant appliqués l'un contre l'autre lorsque chaque ergot 112 est logé dans le trou 113 correspondant, ainsi que montré sur la figure 5.

L'enrobage 105 de la jante 4 est présent tout autour de cette dernière, mais au lieu d'avoir une section globalement circulaire comme l'enrobage 5, il a une section en forme de champignon, et plus précisément semi-circulaire du côté interne et en forme de U plus étroit du côté externe.

Le revêtement en cuir 106 est similaire au revêtement 6 mais n'est prévu qu'à l'opposé du manchon 108, la surface latérale interne de celui-ci étant directement en contact avec l'enrobage 105, la forme en champignon que présente ce dernier en section transversale, permettant d'avoir la surface latérale externe du manchon 108 qui est à fleur de celle du revêtement 106, les deux bords longitudinaux du revêtement 106 opposés à ceux réunis par la couture 107 étant pris en sandwich entre le bord longitudinal du manchon 108 et le bord droit de l'enrobage 105 qui se trouve entre la portion à section semi-circulaire et la portion à section en U.

La fabrication de cette variante du volant s'effectue d'une façon similaire, si ce n'est que la couture 107 est réalisée avant que le revêtement 106 soit mis en place sur l'enrobage 105, cette mise en place se faisant par collage, et si ce n'est que l'opération de rapprochement des bords de la fente 109 comporte l'opération d'introduire les ergots 112 dans les orifices 113.

Le manchon 108' montré sur les figures 6 à 8 est similaire au manchon 108, mais la patte de liaison 110 est remplacée par une patte de liaison 110' dont le contour, au lieu d'être rectangulaire, est en forme de noeud papillon, et de même pour le renfoncement 111' qui sert à loger la patte 110', celle-ci présentant à chaque extrémité, du côté en contact avec le fond du renfoncement 111, une surépaisseur procurant une butée transversale 114 à laquelle se raccorde une rampe 115 prévue entre cette butée et l'extrémité correspondante de la patte 110', le renfoncement 111 présentant, quant à lui, à chaque extrémité, un creux 116 servant à loger la surépaisseur correspondante de la patte 110', et à fournir pour la butée 114 une contre-butée 117.

Le manchon 108' se met en place sur le reste du volant comme le manchon 108, la patte de liaison 110' étant d'abord insérée dans le renfoncement 111 de l'un des côtés de la fente 109' grâce à un mouvement transversal, comme montré par une flèche sur la figure 6, la mise en place de la patte 110 dans la partie du renfoncement 111 située de l'autre côté de la fente 109' s'effectuant simplement en rapprochant les bords de celle-ci suivant un mouvement orienté circonférentiellement au cours duquel la patte 104 s'y encliquète.

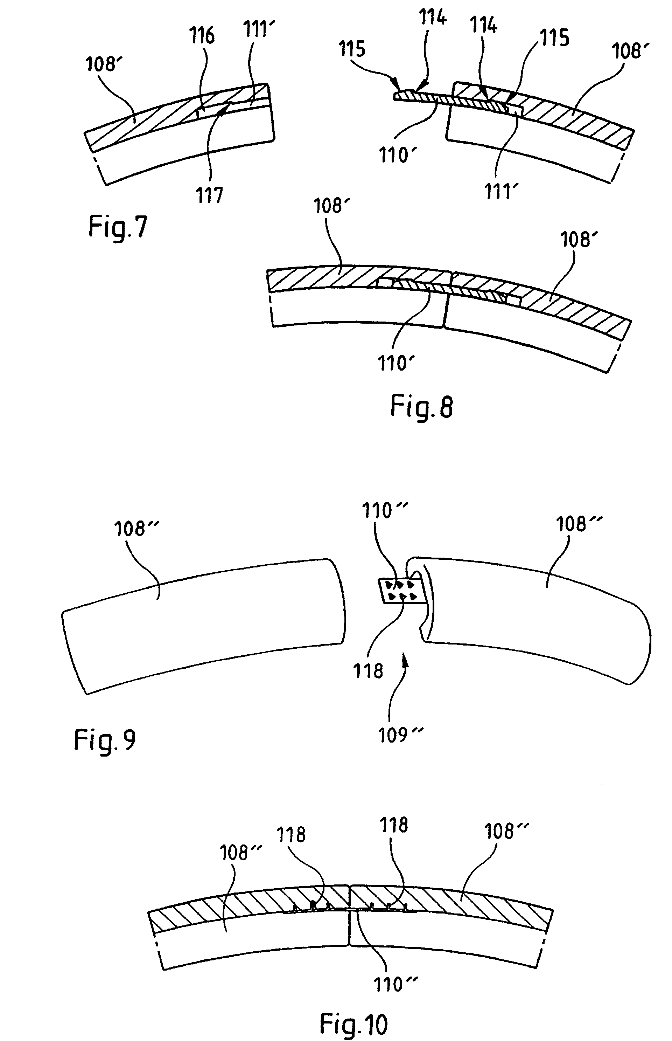

Le manchon 108" est similaire au manchon 108, si ce n'est qu'il n'y a pas de renfoncement 111 et que la patte de liaison 110 est remplacée par une patte 110" munie de griffes 118 capables de s'enfoncer dans la matière du manchon 108", ces griffes étant réparties en deux groupes respectivement pour un côté et pour l'autre de la fente 109", ainsi que montré sur la figure 10.

Le manchon 208 est similaire au manchon 108, si ce n'est qu'il ne présente ni renfoncement 111 ni patte de liaison 110, le maintien à l'état rapproché des bords la fente 209 se faisant grâce à deux ergots 210 en saillie par rapport à l'un des bords de la fente 209 et grâce à deux orifices 211 ménagés dans l'autre bord de la fente 209, les ergots 210 étant munis de moyens anti-retour, ici de forme tronconique, interdisant le retrait des ergots 210 hors des orifices 211 une fois qu'ils y ont été enfoncés.

Le manchon 308 est similaire au manchon 108, si ce n'est qu'il ne comporte ni patte de liaison 110 ni renfoncement 111, mais deux ergots 310 situés respectivement de part et d'autre de la fente 309, chacun de ces ergots étant orienté suivant une direction transversale et disposé en saillie par rapport à la surface latérale interne du manchon 308.

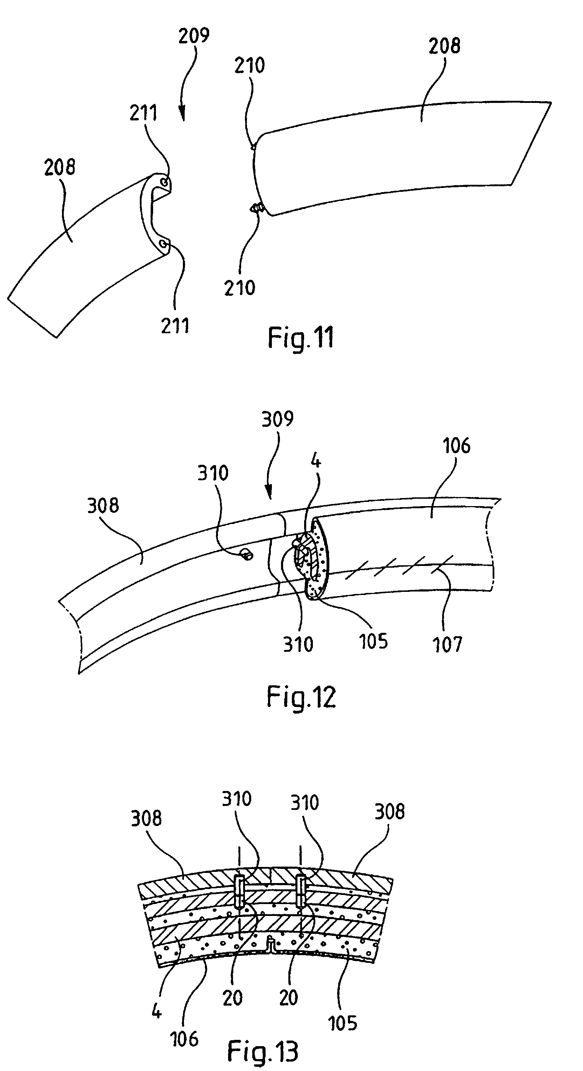

Pour recevoir les ergots 310, deux orifices 20 sont ménagés dans l'enrobage 105 et surtout dans la jante 4, l'écartement entre les orifices 20 correspondant à celui qu'ont les ergots 310 lorsque les bords de la fente 309 sont l'un contre l'autre, ainsi que montré sur la figure 13.

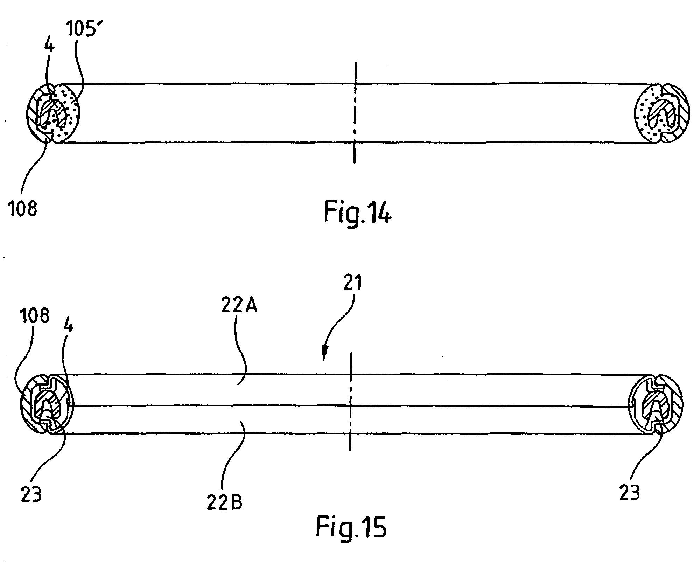

La deuxième variante du volant 1 illustré sur la figure 14 est similaire à celle des figures 3 à 5, si ce n'est qu'il n'y a pas de revêtement en cuir 106, la mousse de polyuréthane 105' étant moulée de façon à comporter directement une peau intégrée.

Dans la troisième variante du volant 1 montré sur la figure 15, l'enrobage 105 est remplacé par un deuxième manchon 21 en matière rigide, ici en polypropylène, comportant une partie supérieure 22A et une partie inférieure 22B réunies par un bord circonférentiel par emboîtement grâce à un système du type rainure-languette, le manchon 22B présentant des ergots 23 de positionnement vis-à-vis de la jante 4, le bord de chacune des portions 22A et 22B opposé à celui par lequel elle est réunie à l'autre portion, étant pris en sandwich entre la jante 4 et le manchon 108, le manchon 21 ayant globalement, comme l'enrobage 105, une forme de champignon de sorte que les surfaces externes des deux manchons sont à fleur l'une de l'autre.

Pour assembler les manchons 21 et 108 sur la jante 4, on met d'abord en place le manchon 21 sur l'armature (le manchon 21 comporte des portions non représentées servant à habiller les branches 3A et 3B de l'armature) puis l'on vient mettre en place le manchon 108 qui sert à verrouiller l'ensemble grâce aux moyens dont il est muni pour maintenir rapprochés les bords de la fente 109.

Dans d'autres variantes, le manchon 108 montré sur les figures 14 et 15, est remplacé par le manchon 108', par le manchon 108", par le manchon 208 ou par le manchon 308.

De nombreuses autres variantes sont possibles en fonction des circonstances, et en particulier, au lieu d'être en bois massif, le manchon 8, 108, 108', 108", 208 ou 308 peut être réalisé dans une autre matière rigide, notamment le bois lamellé ou aggloméré, une matière plastique ou composite, voire de l'acier ou un alliage métallique, nu ou revêtu d'une peinture, de tissu, de cuir ou d'un plaquage, par exemple en bois ; davantage qu'une fente transversale peut être prévue pour le manchon ; d'autres moyens peuvent être prévus dans le volant pour maintenir rapprochés les bords de la ou des fente(s), en particulier des collages complémentaires ; et de même pour la deuxième coque 21.

Plus généralement, on rappelle que l'invention ne se limite pas aux exemples décrits et représentés.

## Revendications

1. Volant de direction de véhicule dont la jante de l'armature est habillée par un manchon en matière rigide telle que du bois disposé en périphérie externe et par une garniture complémentaire, **caractérisé en ce que** ledit manchon (8 ; 108 ; 108' ; 108" ; 208 ; 308) présente une fente transversale (9 ; 109 ; 109' ; 109" ; 209 ; 309) et **en ce que** ledit volant comporte des moyens (110, 111 ; 110', 111'; 110'; 210, 211 ; 310) pour maintenir rapprochés les bords de ladite fente.

2. Volant selon la revendication 1, **caractérisé en ce que** la surface latérale interne dudit manchon (8 ; 108 ; 108' ; 108" ; 208 ; 308) est concave.

3. Volant selon l'une quelconque des revendications 1 ou 2, **caractérisé en ce que** ladite garniture complémentaire comporte une matière souple (5 ; 105) disposée entre ladite jante (4 ; 104) et ledit manchon (108 ; 108'; 108" ; 208; 308).

4. Volant selon la revendication 3, **caractérisé en ce que** ladite matière souple (5 ; 105) est moulée tout autour de la jante (4 ; 104).

5. Volant selon la revendication 4, **caractérisé en ce que** ledit manchon (8 ; 108 ; 108' ; 108" ; 208 ; 308) présente une surface latérale interne ayant une section en U tandis que ladite matière souple (105) présente une section en forme de champignon de sorte que la surface externe du manchon (108 ; 108' ; 108" ; 208 ; 308) est sensiblement à fleur de la surface externe de la portion de ladite matière souple (105) qui n'est pas recouverte par le manchon.

6. Volant selon l'une quelconque des revendications 3 à 5, **caractérisé en ce que** ladite matière souple (5 ; 105) est une mousse synthétique.

7. Volant selon l'une quelconque des revendications 1 à 6, **caractérisé en ce qu'**il comporte une matière souple (5) disposée tout autour de la jante (4) et un revêtement (6) en feuille disposé tout autour de ladite matière souple (5), ledit manchon (8) étant rapporté sur la périphérie externe dudit revêtement (6).

8. Volant selon l'une quelconque des revendications 1 à 6, **caractérisé en ce qu'**il comporte une matière souple (105) recouvrant la jante (104) et un revêtement (106) en feuille recouvrant ladite matière souple exclusivement à l'opposé dudit manchon (108 ; 108' ; 108" ; 208 ; 308).

9. Volant selon l'une quelconque des revendications 7 ou 8, **caractérisé en ce que** ledit revêtement en feuille (6 ; 106) présente des bords longitudinaux réunis par une couture circonférentielle (7 ; 107) située du côté interne.

10. Volant selon l'une quelconque des revendications 1 à 6, **caractérisé en ce qu'**il comporte une mousse de polyuréthane (105') à peau intégrée moulée tout autour de ladite jante (4).

11. Volant selon l'une quelconque des revendications 1 ou 2, **caractérisé en ce que** ladite garniture complémentaire est formée par un deuxième manchon (21) en matière rigide disposé en périphérie interne.

12. Volant selon la revendication 11, **caractérisé en ce que** ledit deuxième manchon (21) comporte une portion supérieure (22A) et une portion inférieure (22B) réunies l'une à l'autre.

13. Volant selon la revendication 12, **caractérisé en ce que** lesdites première et deuxième portions (22A, 22B) dudit deuxième manchon (21) comportent chacune un premier bord longitudinal par lequel elle est réunie à l'autre portion et un deuxième bord longitudinal par lequel elle est réunie audit manchon (108).

14. Volant selon l'une quelconque des revendications 11 à 13, **caractérisé en ce que** ledit deuxième manchon (21) comporte un moyen de positionnement (23) par rapport à la jante (4).

15. Volant selon l'une quelconque des revendications 11 à 14, **caractérisé en ce que** ledit manchon (108) présente une surface interne ayant une section en U tandis que ledit deuxième manchon (21) présente une section en forme de champignon de sorte que la surface externe du manchon (108) est sensiblement à fleur de la surface externe du deuxième manchon (21).

16. Volant selon l'une quelconque des revendications 1 à 15, **caractérisé en ce que** lesdits moyens pour maintenir rapprochés les bords de la fente comportent une patte de liaison (10 ; 110 ; 110' ; 110") solidarisée audit manchon (8 ; 108 ; 108' ; 108") respectivement de part et d'autre de ladite fente (9; 109; 109'; 109").

17. Volant selon la revendication 16, **caractérisé en ce que** ladite patte de liaison (10 ; 110 ; 110') est logée dans un renfoncement (11 ; 111 ; 111') ménagé en creux par rapport à la surface latérale interne dudit manchon (8; 108; 108').

18. Volant selon l'une quelconque des revendications 16 ou 17, **caractérisé en ce que** ladite patte de liaison (10) est solidarisée audit manchon (8) par collage.

19. Volant selon l'une quelconque des revendications 16 à 18, **caractérisé en ce que** ladite patte de liaison (110 ; 110'; 110") est solidarisée audit manchon (108 ; 108' ; 108") par obstacle.

20. Volant selon la revendication 19, **caractérisé en ce que** ledit volant comporte deux ergots (112) orientés transversalement et coopérant avec ladite patte de liaison (110) et avec ledit manchon (108).

21. Volant selon la revendication 19, **caractérisé en ce que** ladite patte de liaison (110") a un contour en forme de noeud papillon à chaque bout duquel il présente une surface de butée (114) orientée transversalement.

22. Volant selon la revendication 19, **caractérisé en ce que** ladite patte de liaison (110") comporte des griffes (118) adaptées à s'enfoncer dans la matière dudit manchon (108").

23. Volant selon l'une quelconque des revendications 1 à 15, **caractérisé en ce que** lesdits moyens pour maintenir rapprochés les bords de ladite fente comportent, de chaque côté de celle-ci, un ergot (310) transversal en saillie par rapport à la surface latérale interne dudit manchon (308) tandis que ladite jante présente deux orifices (20) adaptés chacun à recevoir un respectif desdits ergots (310).

24. Volant selon l'une quelconque des revendications 1 à 23, **caractérisé en ce que** ledit manchon est en bois.

25. Volant selon l'une quelconque des revendications 1 à 23, **caractérisé en ce que** ledit manchon est en matière plastique revêtue de bois.

## Patentansprüche

1. Lenkrad für ein Kraftfahrzeug, von dem der Umhüllungskranz aus einer am Außenumfang angeordneten Hülse aus einem festen Material wie Holz und aus einer ergänzenden Einlage zusammengesetzt ist, **dadurch gekennzeichnet, dass** die Hülse (8; 108; 108'; 108"; 208; 308) eine quer verlaufende Fuge (9; 109; 109'; 109"; 209; 309) vorweist und dass das Lenkrad Mittel (110, 111; 110', 111'; 110"; 210; 211; 310) zum Aneinanderhalten der Kanten der Fuge umfaßt.

2. Lenkrad nach Anspruch 1, **dadurch gekennzeichnet, dass** die Innenseitenfläche der Hülse (8; 108; 108'; 108"; 208; 308) konkav ist.

3. Lenkrad nach einem der Ansprüche 1 oder 2, **dadurch gekennzeichnet, dass** die ergänzende Einlage ein biegsames Material (5; 105) aufweist, welches zwischen dem Kranz (4; 104) und der Hülse (8; 108; 108'; 108"; 208; 308) angeordnet ist.

4. Lenkrad nach Anspruch 3, **dadurch gekennzeichnet, dass** das biegsame Material (5; 105) vollständig um den Kranz (4; 104) herumgeformt ist.

5. Lenkrad nach Anspruch 4, **dadurch gekennzeichnet, dass** die Hülse (8; 108; 108'; 108"; 208; 308) eine Innenseitenfläche bietet, welche einen U-Querschnitt hat, und dass das biegsame Material (105) im Querschnitt eine Pilzform derart hat, dass die Außenfläche der Hülse (108; 108'; 108"; 208; 308) im wesentlichen bündig mit der Außenfläche des Abschnittes des biegsamen Materials (105) verläuft, welche nicht von der Hülse bedeckt ist.

6. Lenkrad nach einem der Ansprüche 3 bis 5, **dadurch gekennzeichnet, dass** das biegsame Material (5; 105) ein Schaumstoff auf Kunststoffbasis ist.

7. Lenkrad nach einem der Ansprüche 1 bis 6, **dadurch gekennzeichnet, dass** es ein vollständig um den Kranz (4) herum angeordnetes, biegsames Material (5) sowie einen Folien-Überzug (6) aufweist, welcher um das biegsame Material (5) herum vorgesehen ist, wobei die Hülse (8) am Außenumfang des Überzuges aufgesetzt ist.

8. Lenkrad nach einem der Ansprüche 1 bis 6, **dadurch gekennzeichnet, dass** es ein biegsames Material (105), welches den Kranz (104) überzieht, sowie einen Folien-Überzug (106) aufweist, welcher das biegsame Material ausschließlich auf der der Hülse (108; 108'; 108"; 208; 308) entgegengesetzten Seite überzieht.

9. Lenkrad nach einem der Ansprüche 7 oder 8, **dadurch gekennzeichnet, dass** der Folien-Überzug (6; 106) Längskanten bietet, welche durch eine an der Innenseite angeordnete, umlaufende Naht (7; 107) verbunden sind.

10. Lenkrad nach einem der Ansprüche 1 bis 6, **dadurch gekennzeichnet, dass** es einen Schaumstoff(105') auf Kunststoffbasis als Haut aufweist, welcher vollständig um den Kranz (4) herum einstückig geformt ist.

11. Lenkrad nach einem der Ansprüche 1 oder 2, **dadurch gekennzeichnet, dass** die ergänzende Einlage durch eine zweite Hülse (21) aus einem festen Material gebildet ist, welche am Innenumfang angeordnet ist.

12. Lenkrad nach Anspruch 11, **dadurch gekennzeichnet, dass** die zweite Hülse (21) einen höherstehenden Abschnitt (22A) und einen tieferstehenden Abschnitt (22B) aufweist, welche miteinander verbunden sind.

13. Lenkrad nach Anspruch 12, **dadurch gekennzeichnet, dass** der erste und der zweite Abschnitt (22A, 22B) der zweiten Hülse (21) jeweils eine erste Längskante, mit der er mit dem anderen Abschnitt verbunden ist, und eine zweite Längskante aufweist, mit der mit der Hülse (108) verbunden ist.

14. Lenkrad nach einem der Ansprüche 11 bis 13, **dadurch gekennzeichnet, dass** die zweite Hülse (21) ein Mittel (23) zur Positionierung bezüglich des Kranzes (4) umfaßt.

15. Lenkrad nach einem der Ansprüche 11 bis 14, **dadurch gekennzeichnet, dass** die Hülse (108) eine Innenfläche bietet, welche einen U-Querschnitt hat, und dass die zweite Hülse (21) im Querschnitt eine Pilzform derart hat, dass die Außenfläche der Hülse (108) im wesentlichen bündig mit der Außenfläche der zweiten Hülse (21) verläuft.

16. Lenkrad nach einem der Ansprüche 1 bis 15, **dadurch gekennzeichnet, dass** die Mittel zum Aneinanderhalten der Kanten der Fuge eine Verbindungsklammer (10; 110; 110'; 110") aufweisen, welche jeweils mit dem einen Teil mit der Hülse (8; 108; 108'; 108") und mit dem anderen mit der Fuge verbunden ist.

17. Lenkrad nach Anspruch 16, **dadurch gekennzeichnet, dass** sich die Verbindungsklammer (10; 110; 110') in einer an der Innenseitenfläche der Hülse (8; 108; 108') ausgenommenen Vertiefung (11; 111; 111') erstreckt.

18. Lenkrad nach einem der Ansprüche 16 oder 17, **dadurch gekennzeichnet, dass** die Verbindungsklammer (10) durch Kleben mit der Hülse (8) verbunden ist.

19. Lenkrad nach einem der Ansprüche 16 bis 18, **dadurch gekennzeichnet, dass** die Verbindungsklammer (110; 110'; 110") durch eine Hemmung mit der Hülse (8) verbunden ist.

20. Lenkrad nach Anspruch 19, **dadurch gekennzeichnet, dass** das Lenkrad zwei querverlaufende Stifte (112) aufweist, welche mit der Verbindungsklammer (110) und der Hülse (108) zusammenwirken.

21. Lenkrad nach Anspruch 19, **dadurch gekennzeichnet, dass** die Verbindungsklammer (110") eine Kontur in Form einer Fliege hat, die an jedem ihrer Enden eine querverlaufende Gegenfläche (114) bietet.

22. Lenkrad nach Anspruch 19, **dadurch gekennzeichnet, dass** die Verbindungsklammer (110") Zähne (118) umfaßt, welche dazu ausgelegt sind, in das Material der Hülse (108") einzudringen.

23. Lenkrad nach einem der Ansprüche 1 bis 15, **dadurch gekennzeichnet, dass** die Mittel zum Aneinanderhalten der Kanten der Fuge an jeder Seite eine querverlaufende, bezüglich der Innenseitenfläche der Hülse (308) hervorstehende Nase aufweisen, während der Kranz zwei Öffnungen (20) hat, welche zur Aufnahme jeweils einer der Nasen dienen sollen.

24. Lenkrad nach einem der Ansprüche 1 bis 23, **dadurch gekennzeichnet, dass** die Hülse aus Holz ist.

25. Lenkrad nach einem der Ansprüche 1 bis 23, **dadurch gekennzeichnet, dass** die Hülse aus einem mit Holz verblendeten Kunststoffmaterial ist.

## Claims

1. Vehicle steering wheel of which the rim of the frame is covered by a sleeving member of rigid material such as wood arranged on the outer periphery and by a complementary covering, **characterized in that** said sleeving member (8 ; 108 ; 108' ; 108" ; 208 ; 308) has a transverse split (9 ; 109 ; 109'; 109" ; 209 ; 309) and **in that** said steering wheel comprises means (110, 111 ; 110', 111' ; 110' ; 210, 211 ; 310) to hold together the edges of said split.

2. Vehicle steering wheel according to claim 1, **characterized in that** the inner lateral surface of said sleeving member (8 ; 108 ; 108', 108" ; 208 ; 308) is concave.

3. Vehicle steering wheel according to any one of claims 1 or 2, **characterized in that** said complementary covering comprises a flexible material (5 ; 105) arranged between said rim (4 ; 104) and said sleeving member (108 ; 108', 108"; 208 ; 308).

4. Vehicle steering wheel according to claim 3, **characterized in that** said flexible material (5 ; 105) is molded around the rim (4 ; 104).

5. Vehicle steering wheel according to claim 4, **characterized in that** said sleeving member (8 ; 108 ; 108', 108" ; 208 ; 308) has an inner lateral surface of U-shaped cross-section whereas the flexible material (105) has a mushroom-shaped cross-section such that the outer surface of the sleeving member (108 ; 108' ; 108" ; 208 ; 308) is substantially level with the outer surface of the portion of said flexible material (105) which is not covered by the sleeving member.

6. Vehicle steering wheel according to any one of claims 3 to 5, **characterized in that** said flexible material (5 ; 105) is a synthetic foam.

7. Vehicle steering wheel according to any one of claims 1 to 6, **characterized in that** it comprises a flexible material (5) disposed completely around the rim (4) and a dressing (6) of sheet material disposed completely around said flexible material (5), said sleeving member (8) being added to the outer periphery of said dressing (6).

8. Vehicle steering wheel according to any one of claims 1 to 6, **characterized in that** it comprises a flexible material (105) covering the rim (104) and a dressing (106) of sheet material covering said flexible material solely on the opposite side to said sleeving member (108 ; 108'; 108"; 208 ; 308).

9. Vehicle steering wheel according to any one of claims 7 or 8, **characterized in that** said dressing of sheet material (6 ; 106) has longitudinal edges joined by a circumferential seam (7 ; 107) situated on the inner side.

10. Vehicle steering wheel according to any one of claims 1 to 6, **characterized in that** it comprises polyurethane foam (105') with integral skin molded completely around said rim (4).

11. Vehicle steering wheel according to any one of claims 1 or 2, **characterized in that** said complementary covering is formed by a second sleeving member (21) of rigid material arranged on the inner periphery.

12. Vehicle steering wheel according to claim 11, **characterized in that** said second sleeving member (21) comprises an upper portion (22A) and a lower portion (22B) joined together.

13. Vehicle steering wheel according to claim 12, **characterized in that** said first and second portions (22A, 22B) of said second sleeving member (21) each comprise a first longitudinal edge by which it is joined to the other portion and a second longitudinal edge by which it is joined to said sleeving member (108).

14. Vehicle steering wheel according to any one of claims 11 to 13, **characterized in that** said second sleeving member (21) comprises a means (23) for positioning with respect to the rim (4).

15. Vehicle steering wheel according to any one of claims 11 to 14, **characterized in that** said sleeving member (108) comprises an inner surface having a U-shaped cross-section whereas said second sleeving member (21) comprises a mushroom-shaped cross-section such that the outer surface of the sleeving member (108) is substantially level with the outer surface of the second sleeving member (21).

16. Vehicle steering wheel according to any one of claims 1 to 15, **characterized in that** said means for holding together the edges of the split comprise a linking member (10 ; 110 ; 110' ; 110") joined to said sleeving member (8 ; 108 ; 108' ; 108") respectively on each side of said split (9 ; 109 ; 109'; 109").

17. Vehicle steering wheel according to claim 16, **characterized in that** said linking member (10 ; 110 ; 110') is housed in a recess (11; 111; 111') formed as a hollow with respect to the inner lateral surface of said sleeving member (8 ; 108 ; 108').

18. Vehicle steering wheel according to any one of claims 16 or 17, **characterized in that** said linking member (10) is joined to said sleeving member (8) by gluing.

19. Vehicle steering wheel according to any one of claims 16 to 18, **characterized in that** said linking member (110; 110'; 110") is joined to said sleeving member (108 ; 108', 108") by blocking.

20. Vehicle steering wheel according to claim 19, **characterized in that** said steering wheel comprises two lugs (112) oriented transversally and cooperating with said linking member (110) and with said sleeving member (108).

21. Vehicle steering wheel according to claim 19, **characterized in that** said linking member (110") has an bow-tie shaped outline at each end of which it has a transversally oriented abutment surface (114).

22. Vehicle steering wheel according to claim 19, **characterized in that** said linking member (110") comprises claws (118) adapted to sink into the material of said sleeving member (108").

23. Vehicle steering wheel according to any one of claims 1 to 15, **characterized in that** said means for holding together the edges of said split comprise, on each side of the latter, a transverse lug (310) projecting with respect to the inner lateral surface of said sleeving member (308) whereas said rim comprises two apertures (20) each adapted to receive a respective one of said lugs (310).

24. Vehicle steering wheel according to any one of claims 1 to 23, **characterized in that** said sleeving member is of wood.

25. Vehicle steering wheel according to any one of claims 1 to 23, **characterized in that** said sleeving member is of plastics material faced with wood.
